# EUROPÄISCHE PATENTSCHRIFT

(11) **EP 3 178 901 B1**
(45) Veröffentlichungstag und Bekanntmachung des Hinweises auf die Patenterteilung: **25.03.2020**
(21) Anmeldenummer: 16201599.4
(22) Anmeldetag: 01.12.2016
(51) Int. Cl.: C09K 8/04, F17D 1/16

(54) **HOCHDICHTE BOHRLOCHFLÜSSIGKEITEN MIT NIEDRIGEN KRISTALLISATIONSTEMPERATUREN**
HIGH DENSITY BOREHOLE FLUIDS HAVING LOW CRYSTALLIZATION TEMPERATURES
FLUIDES HAUTE DENSITÉ POUR PUITS DE FORAGE À BASSES TEMPÉRATURES DE CRISTALLISATION

(30) Priorität: 07.12.2015 DE 102015224469
(43) Veröffentlichungstag der Anmeldung: 14.06.2017
(73) Patentinhaber: Addcon Europe GmbH, 06749 Bitterfeld-Wolfen (DE)
(72) Erfinder: Klaproth, Anne, 04157 Leipzig (DE); Lerch, Frank, 83229 Aschau im Chiemgau (DE); Kilian, Norman, 06114 Halle (DE); Kochannek, Bernd, 53113 Bonn (DE)
(74) Vertreter: dompatent von Kreisler Selting Werner - Partnerschaft von Patent- und Rechtsanwälten mbB

(56) Entgegenhaltungen:
- EP-A1- 0 572 113
- EP-B1- 0 922 079
- WO-A1-99/23188
- US-A1- 2014 116 710
- US-A1- 2014 246 198
- SIV HOWARD ET AL: "Formate Brines and their Crystallization Temperatures -New Insight into Fluid Behavior and Measuring Methodology", SPE INTERNATIONAL SYMPOSIUM ON OIFIELD CHEMISTRY, 13. April 2015 (2015-04-13), XP055367396, DOI: https://doi.org/10.2118/173741-MS

## Beschreibung

Die vorliegende Erfindung beschreibt die Verwendung hochkonzentrierter Flüssigkeiten auf Basis von organischen Salzen zum Bohren und Komplettieren von Bohrlöchern.

Bohrungen nach Öl und Gas erfordern den Einsatz von Bohrflüssigkeiten, die verschiedenste Ansprüche erfüllen müssen. Je nach Art des Gesteins, erforderlicher Schmierung, Kühlung, Abtransport des herausgebohrten Gesteins, Druckkontrolle zur Vermeidung von sogenannten Blow-Outs, Stabilisierung, Reinigung und Prüfung des Bohrlochs werden individuelle Eigenschaften der Bohrflüssigkeit gefordert.

Derzeit eingesetzte Bohrlochflüssigkeiten basieren meist auf Solen, die aufgrund ihrer hohen Dichte und ihres flüssigen Charakters ohne Schwebeteilchen besonders für diese Zwecke geeignet scheinen. Verwendete Salze umfassen hauptsächlich Halogenide mit Kationen der Alkali- und Erdalkalimetalle wie Calciumchlorid, Calciumbromid oder Kaliumbromid.

Zur Erhöhung der Dichte werden Beschwerungsmittel wie Bariumsulfat, Eisenmineralien oder Calciumcarbonat zugesetzt. Nachteile dieser Zusätze sind unter anderem die Giftigkeit von Bariumsulfat für Wasserorganismen sowie das Absetzen dieser Schwebeteilchen im Bohrloch. Es ist daher wünschenswert homogene Flüssigkeiten höherer Dichte ohne den Zusatz heterogener Beschwerungsmittel zu generieren.

Seit dem letzten Jahrzehnt finden auch Solen auf Basis von Formiaten Anwendung. Der Einsatz von Salzen der Ameisensäure konnte viele Probleme, die durch feste Beschwerungsmittel auftraten, lösen. Derzeit lassen sich maximale Dichten bis 2,3 g/cm³ auf Basis von Cäsiumformiat und bis 1,57 g/cm³ bei Raumtemperatur (20 °C) für Lösungen von Kaliumformiat erreichen. Formiatbasierte Bohrflüssigkeiten sind aufgrund Ihrer biologischen Abbaubarkeit und geringen aquatischen Toxizität umweltfreundlich, lassen höhere Bohrraten als andere Spüllösungen aufgrund ihrer guten Wärmeleitfähigkeit zu und zeichnen sich durch eine hohe Zuverlässigkeit und niedrige Korrosivität aus.

Bereits im Jahr 1998 wurde untersucht, welche Möglichkeiten zur Steigerung der Dichte einer wässrigen Kaliumformiat-Lösung durch Zusatz verschiedener Additive existieren (Van Ooyen, Johannes, Adrianus, Cornelis; VERDUGT B.V, Well Servicing Fluids. WO 98/08914. 1998 Mar 5). Jedoch fanden solche Materialen bisher keine Anwendung im Feld.

Mit zunehmender Konzentration der Sole steigt deren Kristallisationstemperatur (TCT). Liegt die Umgebungstemperatur unterhalb dieser Temperatur, kann sich die Bohrflüssigkeit kristallin verfestigen und ist damit nicht mehr verwendbar. Eine kosten- und energieintensive Erwärmung der Flüssigkeit ist dann zwingend erforderlich. Eine Absenkung der Kristallisationstemperatur der Bohrflüssigkeit ist daher wünschenswert.

Wässrige Lösungen, die Kaliumformiat und Lithium- und/oder Natriumsalze enthalten, sind aus US 2014/0246198 A1 bekannt. Die hier beschriebenen Zusammensetzungen enthalten neben Kaliumformiat auch Natriumformiat und/oder Natriumcitrat. US 2013/0210686 A1 beschreibt wässrige Lösungen, die Mischungen von Kalium-, Lithium- und/oder Natriumformiat enthalten. Lösungen, die Mischungen aus Kalium- und Natriumformiaten enthalten, sind aus US 2014/0116710 A1 bekannt. Aus US 2011/0247986 A1 gehen wässrige Lösungen, die Kaliumformiat, Natriumformiat und Natriumchlorid umfassen, her vor. DE 602 12 975 T2 beschreibt hochkonzentrierte Lösungen mit Kaliumformiat und Kaliumbromid. US 5,620,947 A beschreibt hochkonzentrierte Lösungen von Kaliumformiat und weiteren Natriumsalzen.

EP 0 922 079 B1 **beschreibt eine wässrige Flüssigkeit für die Bohrlochbehandlung, umfassend eine Lösung eines Kaliumformiats, die dadurch gekennzeichnet ist, dass die Lösung außerdem Kaliumcitrat umfasst.**

Siv Howard et al.: "Formate Brines and their Crystallization Temperatures - New Insight into Fluid Behavior and Measuring Methodology", SPE-173741-MS, Society of Petroleum Engineers, 2015, S. 1 bis 19 **beschreibt Formiatlösungen und ihre Kristallisationstemperaturen und deren Verwendung als Borlochflüssigkeiten.**

WO 99/23188 **beschreibt neue Carboxylat-basierende Bohrlochbehandlungsmittel.**

US 2014/0246198 A1 **beschreibt verzweigt viskoelastische Tenside für Hochtemperatur-Ansäuerung.**

Dementsprechend besteht die Aufgabe der Erfindung in der Verwendung von Solen mit einer hohen Dichte bei Raumtemperatur (20 °C) und einer möglichst geringen Kristallisationstemperatur als Bohrloch- oder Komplettierungsflüssigkeit.

Die Aufgabe der vorliegenden Erfindung wird gelöst durch die Verwendung einer wässrigen Lösung von Kaliumformiat, umfassend weiterhin wenigstens ein gelöstes Lithium- und/oder Natriumsalz, wenigstens einer oder mehrerer organischer oder anorganischer Säuren als Bohrloch- oder Komplettierungsflüssigkeit, dadurch gekennzeichnet, dass die Lithiumsalze Lithiumcitrat und/oder Lithiumamidosulfonat und die Natriumsalze Natriumcitrat und/oder Natriumamidosulfonat umfassen, mit einer gegenüber einer rein aus 75 Gew. % Kaliumformiat und 25 Gew. % Wasser bestehenden Flüssigkeit abgesenkten Kristallisationstemperatur, wobei die Menge des Lithium- und/oder Natriumsalzes insgesamt bis zu 15 Gew. %, insbesondere 1 bis 15 Gew.-%, bezogen auf die Menge an Kaliumformiat, beträgt.

Mit der vorliegenden Erfindung werden Flüssigkeiten auf Basis von Kaliumformiat in Wasser bereitgestellt, die sich durch Zugabe von gelösten Lithium- und/oder Natriumsalzen organischer oder anorganischer Säuren durch eine hohe Dichte, eine niedrige Kristallisationstemperatur und eine gute Umweltverträglichkeit auszeichnen und damit im Besonderen für den Einsatz in Bohrlöchern geeignet sind.

Grundlage dieser Erfindung ist eine wässrige Flüssigkeit basierend auf Kaliumformiat unter Zusatz verschiedener Lithium- und/oder Natriumsalze organischer oder anorganischer Säuren zur Steigerung der Dichte bei Raumtemperatur (20 °C) und Absenkung der Kristallisationstemperatur der Ausgangslösung.

Die hier eingesetzten Lithiumsalze organischer oder anorganischer Säuren, insbesondere der Citronensäure oder der Amidosulfonsäure, sind weder für Menschen noch für Wasserorganismen als giftig eingestuft. Zudem wird keine Bioakkumulation von Lithium erwartet. Daher sind diese Bohrflüssigkeiten als umweltverträglich einzustufen.

Die Bohrlochflüssigkeiten bestehen hauptsächlich aus einer Lösung von Kaliumformiat in Wasser und sind durch den Zusatz von Lithium- und/oder Natriumsalzen organischer Säuren additiviert. Diese Flüssigkeiten zeichnen sich durch ihre hohen Dichten, ihre niedrigen Kristallisationstemperaturen und ihre gute Umweltverträglichkeit aus.

Die Bohrlochflüssigkeiten wurden wie folgt hergestellt:
Die benötigten Mengen an Kalilauge und Alkalimetall-Hydroxid bzw. -carbonat werden vorgelegt. Anschließend wird die gewünschte Carbonsäure sowie Ameisensäure hinzugefügt, bis ein pH-Wert größer 7 erreicht ist. Die entsprechenden Konzentrationen werden durch teilweise Entfernung von Wasser unter vermindertem Druck erhalten.

Eine weitere wichtige Eigenschaft von Bohrlochflüssigkeiten auf Basis von Solen ist die Kristallisationsneigung. Eine niedrige Kristallisationstemperatur ist wünschenswert, um auch bei geringen Umgebungstemperaturen mit einer klaren Bohrflüssigkeit ohne Ausfällungen zu arbeiten. Ein Merkmal der Erfindung ist die deutliche Absenkung der Kristallisationstemperatur durch Zugabe der Lithium- und/oder Natriumsalze. Die Menge an Additiv kann dabei über einen weiten Bereich variiert und damit die Kristallisationstemperatur im gewünschten Maß abgesenkt werden. Der Zusatz von Citraten und/oder Amidosulfonaten (AMSA) ist besonders geeignet. Durch deren gute Löslichkeit können auch größere Mengen an Additiv in die Lösung eingebracht werden. Erfindungsgemäß kann die Kristallisationstemperatur gegenüber einer rein aus 75 Gew. % Kaliumformiat und 25 Gew. % Wasser bestehenden Lösung um bis zu 5 °C oder mehr abgesenkt werden. Die Kristallisationstemperaturen der erfindungsgemäß hergestellten Bohrlochflüssigkeiten wurden in Anlehnung an die von S. Howard *et al.* entwickelte Methode bestimmt (Howard, S., Chrenowski, M.: "Formate Brines and Their Crystallization Temperatures - New Insight into Fluid Behavior and Measuring Methodology", SPE 173741-MS, 2015).

Die vorliegende Erfindung soll durch folgendes Beispiel veranschaulicht werden:

### Beispiel:

Ausgehend von einer wässrigen 65 bis 75 Gew. %igen Kaliumformiat-Lösung in Wasser wurden andere organische Salze (2,5 bis 15 Gew. %, bezogen auf den Feststoffgehalt) hinzugefügt und der Effekt des Additivs auf Dichte und Kristallisationstemperatur untersucht. Alle Experimente wurden bei Raumtemperatur (20 °C) durchgeführt.

Die genaue Prozedur soll anhand von Beispiel 5 beschrieben sein: In einem 2l Kolben wurden 933,8 g 50 Gew.%ige Kalilauge vorgelegt und 60 g Lithiumhydroxid-Monohydrat unter Rühren hinzugefügt. Zu der eisgekühlten Lösung wurden portionsweise 91,5 g Citronensäure und 407,5 g 94 Gew. %ige Ameisensäure zugegeben. Die erhaltene Lösung wurde unter vermindertem Druck von Wasser befreit und die gewünschte Konzentration eingestellt.

Die Ergebnisse sind in der folgenden Tabelle 1 zusammengefasst:

| **Beispiel Nr.** | **Zusatz** | **Gew. % Zusatz** | **Gew. % Feststoffgehalt** | **Dichte [g/cm³]*** | **TCT[°C]** |
|---|---|---|---|---|---|
| 1 | - | 0 | 75 | 1,570 | 6,9 |
| 2 | - | 0 | 77,5 | 1,597 | 9,4 |
| 3** | Natriumcitrat | 5,17 | 77,5 | 1,606 | 5,5 |
| 4** | Lithiumcitrat | 5,33 | 80 | 1,627 | 5,3 |
| 5** | | 10 | 80 | 1,626 | -0,5 |
| 6** | | 10,34 | 82,7 | 1,6537 | 6,4 |
| 7** | | 14,12 | 80 | 1,624 | -8,1 |
| 8** | Lithium-/ Natriumcitrat | 5/5 | 80 | 1,633 | 1,61 |
| 9 | Lithiumacetat | 5,17 | 77,5 | 1,573 | 2,8 |
| 10 | Kaliummethansulfonat | 2,58 | 77,5 | 1,598 | 8,6 |
| 11 | Lithiummethansulfonat | 5,17 | 77,5 | 1,592 | 3,2 |
| 12 | | 5,33 | 80 | 1,618 | 5,3 |
| 13 | Kaliumamidosulfonat | 5,17 | 77,5 | 1,6089 | 6,7 |
| 14** | Natriumamidosulfonat | 5,17 | 77,5 | 1,6098 | 4,0 |
| 15** | Lithiumamidosulfonat | 5,17 | 77,5 | 1,6044 | 2,4 |
| 16** | | 5,33 | 80 | 1,6318 | 4,8 |
| 17** | | 10 | 80 | 1,6377 | -2,9 |
| 18** | Lithium-/Natriumamidosulfonat | 5/5 | 80 | 1,6401 | -1,2 |
| 19 | Lithiumformiat | 2,58 | 77,5 | 1,5914 | 7,0 |
| 20 | Natriumformiat | 2,58 | 77,5 | 1,6027 | 8,0 |

| | | | | | |
|---|---|---|---|---|---|
| * bei Raumtemperatur (20 °C) ** erfindungsgemäß | | | | | |

Die Zugabe von Citrat in Kombination mit einem Erdalkalimetall führte zu einer Erhöhung der Flüssigkeitsdichte. Der Zusatz von Lithiumacetat zeigte einen gegenteiligen Effekt. Weiterhin führte die erfindungsgemäße Zugabe der Lithiumsalze zu einer Senkung der Kristallisationstemperatur. Die Menge der Lithiumsalze konnte dabei über einen weiten Bereich variiert werden. Durch eine Erhöhung des Gewichtsanteils der Lithiumsalze wurde eine Absenkung der Kristallisationstemperatur, jedoch wurde keine weitere Erhöhung der Dichte erreicht.

Beispiel 6 zeigt, dass eine Erhöhung der Konzentration bis 82,7 Gew. % immer noch zu einer stabilen Lösung mit einer Dichte von >1,65 g/cm³ bei Raumtemperatur (20 °C) führte und dabei mit einer Kristallisationstemperatur von 6,4°C im Bereich einer 75 Gew. %-igen Kaliumformiatlösung ohne Zusätze lag.

Der Zusatz von Natriumcitrat bot die Möglichkeit, die Dichte weiter zu steigern, jedoch einhergehend mit einer geringeren Absenkung der Kristallisationstemperatur als bei dem Lithium-Äquivalent.

Eine Kombination aus Lithium- und Natriumsalzen des Citrats, beispielsweise in einem Gewichtsverhältnis von 30 bis 70 Gew. % Lithiumsalz zu 70 bis 30 Gew. % Natriumsalz vereinte die positiven Eigenschaften beider Erdalkalimetallverbindungen, sodass eine deutliche Dichtesteigerung und eine adäquate Senkung der Kristallisationstemperatur erhalten wurde. Das obige Gewichtsverhältnis gilt analog auch für andere Salzpaare.

Die erfindungsgemäße Zugabe von Erdalkalimetallsulfonaten (Beispiele 10 bis 18) führte ebenfalls zu einer Steigerung der Dichte bei gleichzeitiger Absenkung der Kristallisationstemperatur. Anhand der erfindungsgemäßen Methan- und Amidosulfonate der Lithium- und/oder Natriumsalze konnte der Effekt der Erdalkalimetalle erneut festgestellt werden: Mit absinkendem Radius und Zunahme des Gewichtsanteils des Erdalkalimetalls zeigten sich Erniedrigungen der Kristallisationstemperatur.

Wie bereits beim Citratäquivalent gezeigt, steigerte die Kombination aus Lithium- und Natriumamidosulfonat die Dichte weiter auf 1,64 g/cm³ bei Raumtemperatur (20 °C), wobei die Kristallisationstemperatur unter -1°C lag (siehe Beispiel 18).

Der Zusatz von Erdalkalisalzen der Ameisensäure in Form von Lithium- oder Natriumformiat (Beispiel 19 und 20) zeigte einen geringen Effekt auf Dichte und TCT.

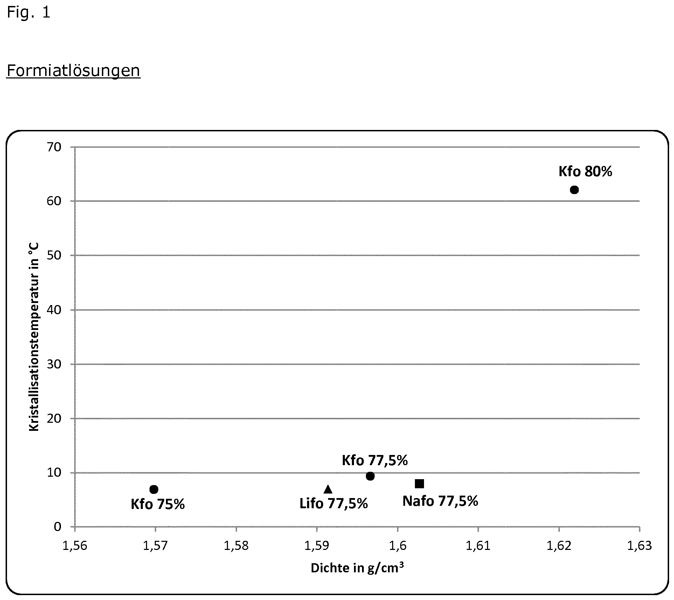

In der Fig. 1 sind beispielhaft die Daten einiger Lösungen aufgeführt:

**Tabelle 2:**

| ***Bezeichnung*** | ***Beispiel*** | ***Gew. % Kaliumformiat*** | ***Gew. % Additiv*** | ***Gew. % Feststoff*** |
|---|---|---|---|---|
| Kfo 75 Gew. % | 1 | 75 | 0 | 75 |
| Kfo 77,5 Gew. % | 2 | 77,5 | 0 | 77,5 |
| Kfo 80 Gew. % | - | 80 | 0 | 80 |
| Lifo 77,5 Gew. % | 19 | 74,92 | 2,58 | 77,5 |
| Nafo 77,5 Gew. % | 20 | 74,92 | 2,58 | 77,5 |

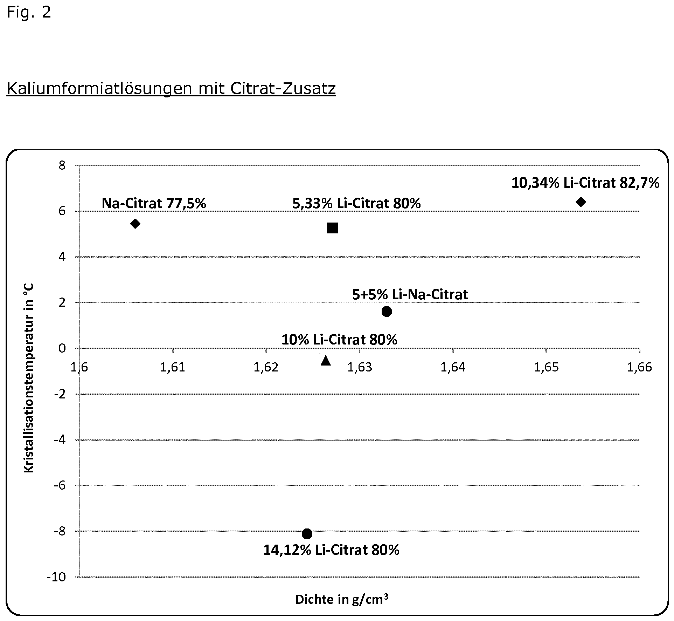

In der Fig. 2 sind beispielhaft weitere Daten einiger Lösungen aufgeführt:

**Tabelle 3:**

| ***Bezeichnung*** | ***Beispiel*** | ***Gew. % Kaliumformiat*** | ***Gew. % Additiv*** | ***Gew. % Feststoff*** |
|---|---|---|---|---|
| Na-Citrat 77,5 Gew. % | 3 | 72,33 | 5,17 | 77,5 |
| 5,33% Li-Citrat 80 Gew. % | 4 | 74,67 | 5,33 | 80 |
| 10% Li-Citrat 80 Gew. % | 5 | 70 | 10 | 80 |
| 10,34% Li-Citrat 82,7 Gew. % | 6 | 72,36 | 10,34 | 82,7 |
| 14,12% Li-Citrat Gew. 80% | 7 | 65,88 | 14,12 | 80 |
| 5+5% Li-Na-Citrat 80 Gew. % | 8 | 70 | 10 | 80 |

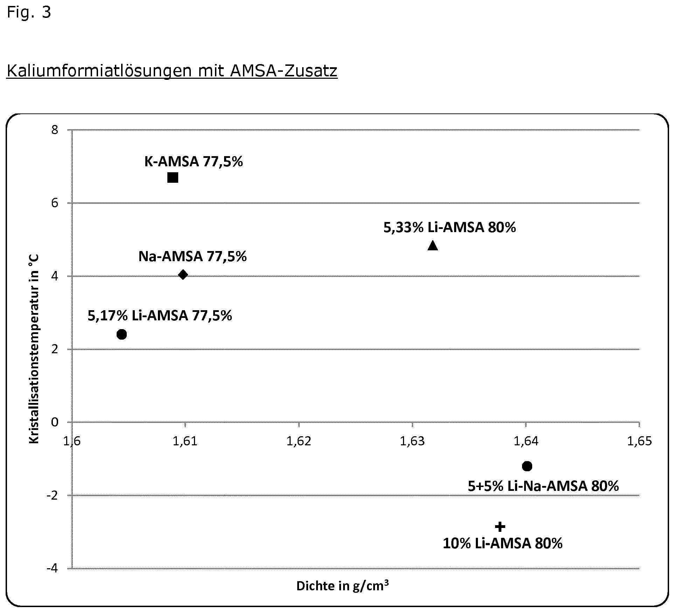

In der Fig. 3 sind beispielhaft weitere Daten einiger Lösungen aufgeführt:

**Tabelle 4:**

| ***Bezeichnung*** | ***Beispiel*** | ***Gew. % Kaliumformiat*** | ***Gew. % Additiv*** | ***Gew. % Feststoff*** |
|---|---|---|---|---|
| K-AMSA 77,5 Gew. % | 13 | 72,33 | 5,17 | 77,5 |
| Na-AMSA 77,5 Gew. % | 14 | 72,33 | 5,17 | 77,5 |
| 5,17% Li-AMSA Gew. 77,5% | 15 | 72,33 | 5,17 | 77,5 |
| 5,33% Li-AMSA 80 Gew. % | 16 | 74,67 | 5,33 | 80 |
| 10% Li-AMSA 80 Gew. % | 17 | 70 | 10 | 80 |
| 5+5% Li-Na-AMSA 80 Gew. % | 18 | 70 | 10 | 80 |

### Abkürzungsverzeichnis:

- Gew. %: Gewichtsprozent
- K-AMSA: Kaliumamidosulfonat
- Kfo: Kaliumformiat
- Li-AMSA: Lithiumamidosulfonat
- Li-Na-AMSA: Lithium-/Natriumamidosulfonat-Mischung
- Li-Na-Citrat: Lithium-/Natriumcitrat-Mischung
- Li-Citrat: Lithiumcitrat
- Lifo: Lithiumformiat
- Na-AMSA: Natriumamidosulfonat
- Na-Citrat: Natriumcitrat
- Nafo: Natriumformiat
- TCT: True crystallization temperature (Kristallisationstempera tur)

## Patentansprüche

1. Verwendung einer wässrigen Lösung von Kaliumformiat, umfassend weiterhin wenigstens ein gelöstes Lithium- und/oder Natriumsalz, wenigstens einer oder mehrerer organischer oder anorganischer Säuren als Bohrloch- oder Komplettierungsflüssigkeit, **dadurch gekennzeichnet, dass** die Lithiumsalze Lithiumcitrat und/oder Lithiumamidosulfonat und die Natriumsalze Natriumcitrat und/oder Natriumamidosulfonat umfassen, mit einer gegenüber einer rein aus 75 Gew. % Kaliumformiat und 25 Gew. % Wasser bestehenden Flüssigkeit abgesenkten Kristallisationstemperatur, wobei die Menge des Lithium- und/oder Natriumsalzes insgesamt bis zu 15 Gew. %, bezogen auf die Menge an Kaliumformiat, beträgt.

2. Verwendung gemäß Anspruch 1, **dadurch gekennzeichnet, dass** die Menge an Lithium- und/oder Natriumsalz 1 bis 15 Gew. %, jeweils bezogen auf die Menge an Kaliumformiat beträgt.

3. Verwendung gemäß Anspruch 1 oder 2, wobei die Dichte der Lösung wenigstens 1.57 g/cm³ bei Raumtemperatur (20 °C) beträgt.

## Claims

1. Use of an aqueous solution of potassium formate further comprising at least one dissolved lithium and/or sodium salt, at least one or more organic or inorganic acids as a well or completion fluid, **characterized in that** the lithium salts include lithium citrate and/or lithium amidosulfonate, and the sodium salts include sodium citrate and/or sodium amidosulfonate, having a crystallization temperature that is lowered as compared to a liquid consisting exclusively of 75% by weight potassium formate and 25% by weight water, wherein the amount of the lithium and/or sodium salt is in total up to 15% by weight, based on the amount of potassium formate.

2. The use according to claim 1, **characterized in that** the amount of lithium and/or sodium salt is from 1 to 15% by weight, respectively based on the amount of potassium formate.

3. The use according to claim 1 or 2, wherein the density of the solution is at least 1.57 g/cm³ at room temperature (20 °C).

## Revendications

1. Utilisation d'une solution aqueuse du formiate de potassium, comprenant en outre au moins un sel de lithium et/ou de sodium dissolu, au moins un ou plusieurs acides organiques ou inorganiques comme fluide de puits ou de complétion, **caractérisée en ce que** lesdits sels de lithium comprennent le citrate de lithium et/ou l'amidosulfonate de lithium, et lesdits sels de sodium comprennent le citrate de sodium et/ou l'amidosulfonate de sodium, ayant une température de cristallisation abaissée par rapport à un fluide consistant exclusivement en 75 % en poids formiate de potassium et 25 % en poids d'eau, dans laquelle la quantité du sel de lithium et/ou de sodium s'élève à 15 % en poids au total, par rapport à la quantité du formiate de potassium.

2. Utilisation selon la revendication 1, **caractérisée en ce que** la quantité du sel de lithium et/ou de sodium s'élève à 1 à 15 % en poids, par rapport à la quantité du formiate de potassium.

3. Utilisation selon la revendication 1 ou 2, dans laquelle la densité de la solution est au moins 1,57 g/m³ à la température ambiante (20 °C).
